# EUROPÄISCHE PATENTSCHRIFT

(11) **EP 0 952 934 B1**
(45) Veröffentlichungstag und Bekanntmachung des Hinweises auf die Patenterteilung: **03.07.2002**
(21) Anmeldenummer: 98904078.7
(22) Anmeldetag: 15.01.1998
(51) Int. Cl.: B60N 2/44

(54) **Auflage für einen Fahrzeugsitz**
Padding for a vehicle seat
Garniture pour siège de véhicule

(30) Priorität: 17.01.1997 DE 19701512; 06.03.1997 DE 19709043
(43) Veröffentlichungstag der Anmeldung: 03.11.1999
(73) Patentinhaber: Bayerische Motoren Werke Aktiengesellschaft, 80788 München (DE)
(72) Erfinder: KRUSE, Klaudia, D-80799 München (DE); SCHIEFER, Ulrich, D-80997 München (DE); GEIB, Willi, D-85716 Unterschlei heim (DE)
(86) Internationale Anmeldenummer: EP9800213
(87) Internationale Veröffentlichungsnummer: WO9831561

(56) Entgegenhaltungen:
- EP-A- 0 116 470
- EP-A- 0 475 593
- DE-A- 4 336 746
- US-A- 5 243 722

## Beschreibung

Die Erfindung bezieht sich auf eine Auflage für einen Fahrzeugsitz bzw. auf einen Fahrzeugsitz mit einer derartigen Auflage (s. zum Beispiel US-A-5 243 722, den Oberbegriffen der Ansprüche 1 und 13 entsprechend).

Bekannte Fahrzeugsitze setzen sich aus einer tragenden Struktur (meist mit einer sogenannten Basisbefederung), einer Polsterauflage (meist aus einem Schaumstoffmaterial) und einem Sitzbezug zusammen.

Aufgabe der Erfindung ist es, eine Auflage für Fahrzeugsitze zu schaffen, mit der neue Möglichkeiten der Polsterung von Fahrzeugsitzen eröffnet werden, mit Vorteilen im Sitzkomfort und der Anpassungsfähigkeit an unterschiedliche Kundenanforderungen.

Diese Aufgabe wird durch die Merkmale der Ansprüche 1, 11, 12 oder 13 gelöst; weitere Merkmale der Erfindung sind in den abhängigen Ansprüchen angegeben.

Kerngedanke ist es dabei, die konventionelle Polsterauflage teilweise oder vollständig durch eine Auflage mit flüssigkeitsgefüllten Kammern zu ersetzen. Die erfindungsgemäße Auflage läßt sich vielseitig im gesamten Kontaktbereich mit dem Fahrzeuginsassen einsetzen, beispielsweise im Bereich des Sitzkissens, der Rückenlehne oder der Kopfstütze.

Gemäß Anspruch 1 wird eine großflächige Auflage für ein Traggestell eines Fahrzeugsitzes vorgeschlagen, die die gesamte bzw. überwiegende Fläche des Fahrzeugsitzes bedeckt. Durch die flüssigkeitsbefüllten Kammern, die über Kanäle miteinander verbunden sind, kann eine differenzierte Einstellung des Härtegrades der einzelnen Bereiche der Sitzkontaktfläche vorgenommen werden. Mit der Erfindung ist es daher möglich, durch gezielte Dimensionierung der Kanäle zwischen den Kammern unterschiedliche Strömungsgeschwindigkeiten für den Flüssigkeitsstrom zwischen den einzelnen Kammern zu erzeugen und dadurch die Federungs- und Dämpfungseigenschaften des Sitzes zu beeinflußen. Auch durch Flüssigkeiten unterschiedlicher Viskosität können Zonen unterschiedlicher Härte geschaffen werden, wobei die Bereiche verschiedener Flüssigkeiten keine Verbindung miteinander aufweisen. Beispielsweise können die außenliegenden Kammern von Sitzkissen oder Rückenlehne mit einem dünnflüssigeren Medium befüllt sein als die stärker belasteten zentralen Bereiche des Sitzkissens oder der Rückenlehne. Durch die erfindungsgemäße Auflage wird auch das Schwingungsverhalten des Fahrzeugsitzes positiv beeinflußt.

In einer Ausgestaltung der Erfindung werden lediglich ausgewählte bestimmte Bereiche des Fahrzeugsitzes mit einer oder mehreren flüssigkeitsgefüllten Kammern versehen (Anspruch 2). Beispielsweise können derartige Kammern im Sinne einer Oberschenkelstütze oder einer Lordosenstütze eingesetzt werden. Die Auflage gemäß Anspruch 2 kann in einen konventionellen Fahrzeugsitz, beispielsweise mit schaumförmigem Polstermaterial und textilem Bezugsstoff, integriert sein. Je nach Anwendungsfall sind jedoch auch Sitze mit relativ starren Kunststoffschalen oder netzartigen Bespannungen vorstellbar, in die an einer oder an mehreren Stellen flüssigkeitsgefüllte Kammern integriert sind. Derartige Auflagen sind beispielsweise für oben offene Freizeitfahrzeuge vorstellbar und zeichnen sich durch große Witterungsbeständigkeit aus. Die Auflagen können in einfacher Weise ausgetauscht werden.

Es ist zwar aus der DE 43 36 746 A1 bekannt, in einem Fahrzeugsitz mehrere Wasserkissen unterzubringen. Die Wasserkissen des bekannten Fahrzeugsitzes sind jedoch untereinander nicht verbunden. Außerdem sind in der Druckschrift keine Maßnahmen zur Beeinflußung der Federungs- und Dämpfungseigenschaften des Sitzes beschrieben.

Daneben ist aus der obengenannten US-A-5 243 722 ein luft- oder flüssigkeitsgefülltes Kissen bekannt, mit einem speziellen Aufbau mit zwei äußeren Decklagen und zwei inneren Zwischenlagen. Das Kissen ist unter anderem für Anwendungen im medizinischen Bereich konzipiert, insbesondere für dauerhaft bettlägerige Personen.

Wie bereits unter Anspruch 2 erwähnt, können mehrere, voneinander getrennte Auflagen so an einem Sitz angeordnet werden, daß sie den Körper des Insassen gezielt nur an den Kontaktstellen mit dem Sitz stützen (Anspruch 3).

Der Fahrzeugsitz ist bevorzugt mit funktionell getrennten Auflagen für die Sitzfläche und die Rückenlehne versehen, wobei innerhalb der beiden Auflagen die einzelnen Kammern zumindest teilweise miteinander in Verbindung stehen. Gemäß Anspruch 4 sind die Auflagen von Sitzkissen und Rückenlehne entlang ihrer Randbereiche miteinander verbunden. Selbstverständlich können auch mehrere unabhängig voneinander wirkende Auflagen innerhalb des Sitzkissens bzw. der Rückenlehne zusammenhängend ausgebildet sein.

Auflagen gemäß Anspruch 5 sind einfach aufgebaut und dementsprechend kostengünstig in der Herstellung. Durch die Schweißnähte werden Vertiefungen zwischen den Kammern geschaffen, die auch unter Belastung erhalten bleiben und damit einen Luftaustausch im Bereich der Sitzkontaktfläche sicherstellen.

Eine verbesserte Belüftung derjenigen Bereiche der Auflage, die mit dem Körper des Fahrzeuginsassen in Kontakt sind, wird durch die Weiterbildung der Erfindung nach Anspruch 6 erreicht. Voraussetzung ist eine entsprechende Luftdurchlässigkeit auch der darunterliegenden Tragschicht. Zusätzlich kann eine aktive Belüftung, beispielsweise mittels eines Gebläses, vorgesehen sein.

Auflagen gemäß Anspruch 7 sind für Fahrzeugsitze ohne textile Kaschierung, bei denen die Sitzkontaktfläche von der Folie selbst gebildet wird, vorgesehen. Durch das transparente, gegebenenfalls farbige Kunststoffmaterial ergibt sich ein besonderer optischer Effekt, insbesondere, wenn gemäß Anspruch 8 die Kammern mit eingefärbten Flüssigkeiten befüllt sind. Werden Flüssigkeiten unterschiedlicher Viskosität mit unterschiedlichen Farben versehen, ist entweder innerhalb einer Auflage oder beim Austausch einer Auflage gegen eine andere die "Härte" der (einzelnen Bereiche der) Auflage durch die Farbgebung offensichtlich.

Besondere Vorteile ergeben sich aus der Weiterbildung der Erfindung nach Anspruch 9. Die Einlagen für eine Kammer bestehen bevorzugt aus einer Mehrzahl kleinerer, fester Körper, die zusammen mit der Flüssigkeit das Innere der Kammer ausfüllen. Die Einlagen verhindern ein vollständiges Zusammendrücken der Kammer unter Belastung, da sie bevorzugt größer sind als die lichte Weite der Kanäle zwischen den einzelnen Kammern, wodurch die Einlagen einer Kammer fest zugeordnet bleiben. Daneben ist es ebenso möglich, die Größe der Einlagen und der Kanäle so aufeinander abzustimmen, daß die Einlagen zwischen den einzelnen Kammern ausgetauscht werden. Durch die Einlagen kann auch das Strömungsverhalten der Flüssigkeit beeinflußt werden.

Die einzelnen Körper können in ihrer Größe und Härte (Anspruch 10) variieren, je nach Position der Kammer in Bezug auf den Fahrzeuginsassen und damit nach spezifischer Belastung an der betreffenden Stelle des Sitzes. Die Körper verhindern beispielsweise ein vollständiges Zusammendrücken einer Kammer. Sie können hinsichtlich ihrer Größe und Elastizität z. B. so ausgelegt werden, daß sie einen Massageeffekt bewirken. Die Einlagen können auch gezielt als Gestaltungsobjekt eingesetzt werden, wenn die Folie gemäß Anspruch 7 durchsichtig ausgeführt ist. Durch unterschiedliche Farbgebung und/oder Formen der Einlagen (z. B. kugel- oder linsenförmig, grundsätzlich aber auch kantige Raumformen denkbar) können optische Effekte erzielt werden, wobei die Raumform der Einlagen auch die Sitzeigenschaften beeinflußt. Das spezifische Gewicht der Einlagen ist auf die Flüssigkeit in der Kammer abzustimmen, so daß die Einlagen in der Flüssigkeit entweder schweben, absinken oder schwimmen. Insbesondere Einlagen mit einer begrenzten Kompressibilität und Elastizität sind geeignet, den Sitzkomfort zu verbessern. Die Einlagen selbst können beispielsweise als flüssigkeitsgefüllte Hohlkörper ausgebildet sein.

Durch die druckerzeugende Einrichtung gemäß den Ansprüchen 11 und 12 sowie 14 und 15 kann der Flüssigkeitsdruck in der Kammer aktiv verändert werden. Gegenüber einer nur passiven Einstellung der Druckverteilung durch das Körpergewicht des Fahrzeuginsassen können somit die Federungs- und Dämpfungseigenschaften des Sitzes aktiv beeinflußt werden, um einen verbesserten Sitzkomfort und auch einen Gewinn an Sicherheit für den Fahrzeuginsassen zu erreichen. Bevorzugt weist die Auflage mehrere flüssigkeitsgefüllte Kammern auf, die untereinander auch verbunden sein können, wie oben beschrieben. Durch die Möglichkeit einer externen Druckbeaufschlagung kann unter Umständen die Basisbefederung des Fahrzeugsitzes entfallen, wodurch sich eine beträchtliche Kosteneinsparung ergibt.

Durch die Ausgestaltung der Erfindung nach Anspruch 11 kann in der flüssigkeitsgefüllten Kammer ein gegenphasiger Druckaufbau erzeugt werden, um den in den Sitz eingeleiteten Schwingungen entgegenzuwirken. Damit ist ein Ausgleich des Resonanzsystems Fahrzeuginsasse-Fahrzeugsitz möglich, wodurch eine deutliche Verbesserung des Schwingungskomforts erreicht wird. Durch den geschlossenen Regelkreis wird bei allen Schwingungseinwirkungen eine minimale Schwingungsbelastung der Fahrzeuginsassen erreicht.

Außerdem wird durch die Bewegungen der Kammer auch die Luft in der Umgebung des Polsters in Bewegung versetzt, wodurch eine wirksame Belüftung und Feuchtigkeitsabfuhr erreicht wird.

Bei einem Fahrzeugcrash wird durch die auf den Insassen einwirkenden Trägheitskräfte die Sitzpolsterung insbesondere im Bereich der Sitzvorderkante so zusammengedrückt, daß die Gefahr besteht, daß der Fahrzeuginsasse unter dem angelegten Sicherheitsgurt hindurchrutscht. Diesem "Submarining"-Effekt kann gemäß Anspruch 12 entgegengewirkt werden, indem das Polster durch die externe Druckquelle innerhalb kürzester Zeit verhärtet wird.

Gemäß Anspruch 14 kann der Fahrzeuginsasse die gewünschte Härte und die Schwingungseigenschaften der Auflage bestimmen, das heißt, die Charakteristik des Fahrzeugsitzes verändern und den Sitzkomfort beeinflussen. Damit kann mit ein- und demselben Fahrzeugsitz je nach gewählter Einstellung ein "Sportsitz" oder ein "Komfortsitz" dargestellt werden. Bei mehreren Kammern können diese beispielsweise individuell in ihrer Härte eingestellt werden. Dieser vom Fahrzeuginsassen gewählten Grundeinstellung der Sitzcharakteristik kann selbstverständlich eine aktive Regelung des Sitzkomforts gemäß Anspruch 11 zusätzlich überlagert werden.

Gemäß Anspruch 15 wird ein Massageeffekt erreicht, der einer Ermüdung des Fahrzeuginsassen entgegenwirkt und die Durchblutung der Muskulatur anregt. Die Massage kann durch periodische oder unregelmäßige Druckschwankungen erfolgen. Auch können in der Steuer- oder Regelungseinrichtung Programme mit einem vorwählbaren oder individuell programmierbaren Druckverlauf abgelegt sein.

Durch die Ausgestaltung der Erfindung nach Anspruch 13 kann eine physiologische Fahrerentlastung durch eine gleichmäßige Sitzflächen-Belastung erreicht werden. Eine gezielte Gestaltung der Auflage sorgt hierbei für eine entsprechende Lastverteilung. Ein geschlossener Regelkreis ist nicht zwingend notwendig, da die Festlegung bestimmter konstruktiver Parameter in der Regel bereits ausreicht, um eine gleichmäßige Sitzflächen-Belastung zu erzielen. Bei Vorliegen orthopädischer Anforderungen an den Fahrzeugsitz kann durch die erfindungsgemäße Ausgestaltung auch eine gezielte lokale Entlastung bestimmter Körperpartien erreicht werden.

Durch die Integration des Sensors bzw. der Sensoren in die Auflage des Fahrzeugsitzes (Anspruch 16) ergibt sich eine geringe Anzahl von Bauteilen und damit ein geringer Montageaufwand bei der Herstellung des Sitzes. Durch die gleichbleibende Anordnung des Sensors in der Folie verändern sich die Meßbedingungen über der Lebensdauer der Auflage nicht, wodurch ein geringer relativer Fehler erreicht wird. Durch die Erfindung ist eine großflächige Druckerfassung möglich.

Der Sensor kann beispielsweise durch eine flexible "piezokeramische Folie" realisiert werden. Derartige Folien bestehen beispielsweise aus Polyvinylidenfluorid, einem einfach herstellbaren synthetischen Polymerkunststoff, in dem durch ein elektrisches Verfahren ein piezoelektrischer Effekt induziert werden kann. Durch diesen Effekt steht als Maß für die mechanische Verformung der Folie ein elektrisches Signal zur Verfügung.

Fahrzeugsitze mit einer erfindungsgemäßen Auflage gemäß Anspruch 17 lassen sich durch die erfindungsgemäßen, austauschbaren Auflagen in einer großen Variantenvielfalt herstellen. Durch die leichte Austauschbarkeit kann jedoch auch der Kunde, je nach gewünschtem Sitzkomfort, die Auflage individuell austauschen. Alternativ kann die Auflage als integraler Bestandteil eines Sitzes ausgestaltet sein, ohne daß ein regulärer Austausch vorgesehen ist.

Mögliche Ausführungsbeispiele der Erfindung sind nachfolgend in der Zeichnung dargestellt und näher beschrieben. Es zeigt:
- Fig. 1: eine Prinzipdarstellung einer erfindungsgemäßen Auflage in der Draufsicht,
- Fig. 2: eine vergrößerte Schnittdarstellung entlang der Schnittverlaufslinie II-II in Figur 1 und
- Fig.3 bis 5: Fahrzeugsitze mit erfindungsgemäßen Auflagen in perspektivischer Darstellung.

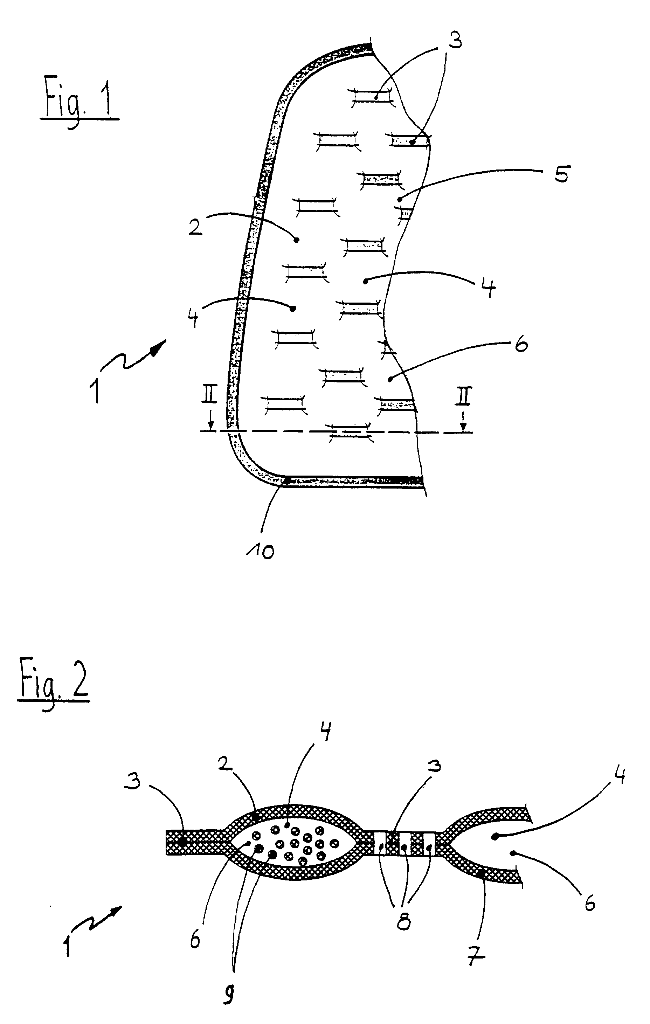

Die Figuren 1 und 2 zeigen den prinzipiellen Aufbau einer erfindungsgemäßen großflächigen Auflage 1. Die Auflage 1 wird von einer oberen und einer unteren Folie 2 bzw. 7 gebildet, wobei die Folien 2 und 7 über eine Vielzahl von Schweißnähten 3 miteinander verbunden sind. Durch die Schweißnähte 3 wird die Auflage 1 in einzelne Kammern 4 unterteilt, die mit einer Flüssigkeit 6 befüllt sind. Die Schweißnähte 3 sind partiell unterbrochen und bilden hierdurch Kanäle 5, über die die Flüssigkeit 6 zwischen den einzelnen Kammern 4 ausgetauscht werden kann. Die Schweißnähte 3 zwischen den Kammern 4 sind zumindest teilweise mit einer Perforation 8 zur Verbesserung des Luftaustausches zwischen der Unter- und der Oberseite der Auflage 1 versehen.

In den Kammern 4 kann sich, wie im linken Teil der Figur 2 dargestellt, neben der Flüssigkeit 6 auch eine Vielzahl von kugelförmigen Einlagen 9 befinden. Die Kugein 9 können unterschiedliche Farben aufweisen, die beispielsweise unterschiedlichen Härtegraden entsprechen.

Die Flüssigkeit 6 kann beispielsweise von Wasser, einem Öl-Wasser-Gemisch, einem Gel, etc. gebildet werden. Eine Temperierung der Flüssigkeit 6 in den Kammern 4 über eine Heizeinrichtung ist mit geringem Aufwand realisierbar. Zur Verhinderung einer Beschädigung der Folien 2 und 7 sind diese entsprechend hoch belastbar auszuführen. Möglicherweise kann eine Flüssigkeit 6 zum Einsatz kommen, die im Fall einer punktuellen Beschädigung der Kammern 4 unter Kontakt mit Luft aushärtet und die Schadstelle selbsttätig verschließt. Die Folien 2 (und 7) können farbig ausgeführt werden. Insbesondere bei der Ausführungsform mit Kugeln 9 im Inneren der Kammern 4 kommen transparente Folien 2 zum Einsatz.

Die Auflage 1 überdeckt beispielsweise die gesamte Oberfläche eines Sitzkissens für einen Fahrzeugsitz und wird an ihren seitlichen Rändern von einer Einfassung 10 in Form einer abdichtenden Schweißnaht begrenzt. Die Auflage 1 kann z. B. über ein Klettband oder eine Klipsverbindung mit der tragenden Struktur eines Fahrzeugsitzes verbunden werden.

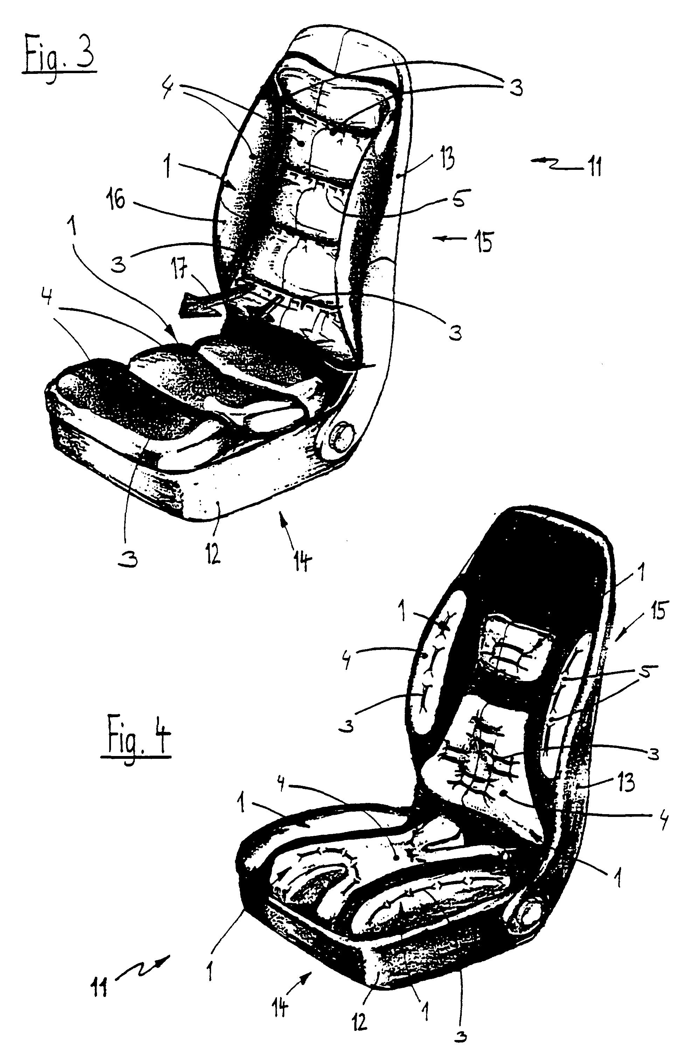

Figur 3 zeigt einen Fahrzeugsitz 11 mit Kunststoffschalen 12 und 13 als tragender Struktur für das Sitzkissen 14 bzw. die Rückenlehne 15. Beide Schalen 12 und 13 sind jeweils ganzflächig mit einer einteiligen Auflage 1 bedeckt, die von mehreren flüssigkeitsbefüllten Kammern 4 gebildet wird. Auch kann eine nicht dargestellte Kopfstütze mit einer weiteren Auflage versehen sein. Die einzelnen Kammern 4 der beiden Auflagen 1 werden durch überwiegend in Fahrzeugquerrichtung verlaufende Schweißnähte 3 (mit Ausnahme der vertikal gerichteten Schweißnähte 3 zur Anbindung der Seitenpolster 16 an die Rückenlehne 15) begrenzt. Die Schweißnähte 3 sind partiell unterbrochen, wodurch Kanäle 5 zwischen den einzelnen Kammern 4 der jeweiligen Auflage 1 entstehen. Zusätzlich sind zumindest einige Schweißnähte 3 perforiert, um einen Luftaustausch zwischen der Vorder- und der Rückseite des Fahrzeugsitzes 11 zu ermöglichen (siehe Luftströmungspfeile 17).

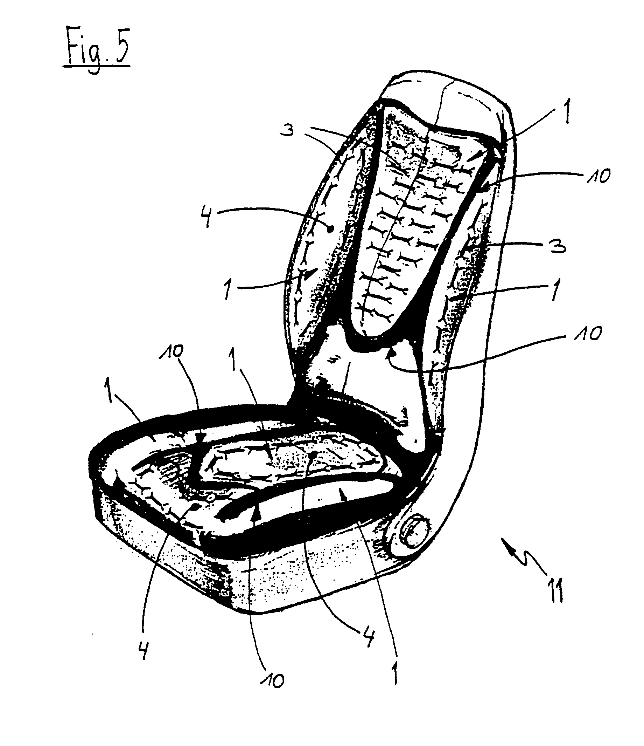

In Figur 4 ist ein Fahrzeugsitz 11 dargestellt, auf dessen Kunststoffschalen 12 und 13 mehrere separate kleinflächigere Auflagen 1 angeordnet sind. Die Auflagen 1 befinden sich nur in den Bereichen des Fahrzeugsitzes 11, die mit dem Körper eines Fahrzeuginsassen in Kontakt kommen, so daß nur an diesen vorbestimmten Kontaktstellen eine Unterstützung der entsprechenden Körperpartien des Insassen stattfindet, im einzelnen sind an der Rückenlehne 15 zwei identische seitliche Auflagen 1 sowie zwei mittlere Auflagen 1 unterschiedlicher Größe vorgesehen, während am Sitzkissen 14 insgesamt drei langgestreckte, individuell geformte Auflagen 1 angeordnet sind.

Der Fahrzeugsitz 11 gemäß Figur 5 ist mit einer Mehrzahl von Auflagen 1 versehen, zwischen denen zwar kein Flüssigkeitsaustausch stattfindet, die jedoch im Unterschied zur Ausführungsform nach Figur 4 entlang ihrer Einfassungen 10 miteinander verbunden sind. Diese begrenzenden Schweißnähte 10 können ebenso wie die Schweißnähte 3 perforiert sein, um die Belüftung der Sitzkontaktfläche zu verbessern.

Die einzelnen Auflagen 1 der Fahrzeugsitze 11 gemäß der Figuren 3 bis 5 sind bevorzugt wie in den Figuren 1 und 2 dargestellt aufgebaut. Selbstverständlich kann die tragende Struktur der Fahrzeugsitze 11 auch von Schalen aus einem metallischen Werkstoff, bespannten Rohrgestellen, etc. gebildet werden.

## Patentansprüche

1. Auflage (1) für einen Fahrzeugsitz (11), mit einer Mehrzahl flüssigkeitsgefüllter Kammern (4), die zumindest teilweise durch Kanäle (5) miteinander verbunden sind, **dadurch gekennzeichnet, daß** die Viskosität der Flüssigkeit (6) und/oder die Form und die Größe der Kanäle (5) im einzelnen so bemessen ist, daß - über der Kontaktfläche mit dem Fahrzeuginsassen betrachtet - Bereiche mit unterschiedlichen Dämpfungs- und Federungseigenschaften gebildet werden, die an die jeweilige Belastung durch den Fahrzeuginsassen angepaßt sind.

2. Auflage nach Anspruch 1,
**dadurch gekennzeichnet, dass** die Kammern (4) an einem bestimmten und begrenzten Bereich der Kontaktfläche des Fahrzeugsitzes (11) mit einem Fahrzeuginsassen angeordnet sind, um eine gezielte Stützung der betreffenden Körperpartie des Fahrzeuginsassen zu erreichen.

3. Auflage nach Anspruch 1 und/oder 2,
**dadurch gekennzeichnet, daß** mehrere separate Auflagen (1) am Fahrzeugsitz (11) angeordnet sind.

4. Auflage nach Anspruch 1 und/oder 2
**dadurch gekennzeichnet, daß** mehrere unabhängig voneinander wirkende Auflagen (1) entlang ihrer Randeinfassungen (10) zu einem einstückigen Gebilde zusammengefaßt sind, wobei die flüssigkeitsbefüllten Kammern (4) der einzelnen Auflagen (1) untereinander nicht in Verbindung stehen.

5. Auflage nach einem der vorangegangenen Ansprüche,
**dadurch gekennzeichnet, daß** die Auflage (1) oberseitig und unterseitig aus einem folienartigen Kunststoffmaterial besteht, wobei die Folien (2, 7) zur Bildung der einzelnen Kammem (4) flüssigkeitsdicht miteinander verschweißt sind.

6. Auflage nach einem der vorangegangenen Ansprüche,
**dadurch gekennzeichnet, daß** die Schweißnähte (3) zwischen den einzelnen Kammern (4) zumindest teilweise perforiert sind.

7. Auflage nach einem der vorangegangenen Ansprüche,
**dadurch gekennzeichnet, daß** zumindest das oberseitige Kunststoffmaterial (2) transparent und/oder farbig ist.

8. Auflage nach einem der vorangegangenen Ansprüche,
**dadurch gekennzeichnet, daß** die Kammern (4) mit einer farbigen Flüssigkeit (6) befüllt sind.

9. Auflage nach einem der vorangegangenen Ansprüche,
**dadurch gekennzeichnet, daß** die Kammern (4) eine Einlage in Form wenigstens eines festen Körpers (9) enthalten.

10. Auflage nach Anspruch 9,
**dadurch gekennzeichnet, daß** die Einlage aus einer Mehrzahl von Körpern (9) unterschiedlicher Größe und/oder Härte besteht.

11. Auflage für einen Fahrzeugsitz, mit wenigstens einer flüssigkeitsgefüllten Kammer, und einer druckerzeugenden Einrichtung zur Veränderung des Drucks in der Kammer, **dadurch gekennzeichnet, daß** die druckerzeugende Einrichtung so mit einer Regeleinrichtung zusammenwirkt, daß ein geschlossener Regelkreis entsteht, der bei Einleitung von Schwingungen in die Auflage einen zu den Schwingungen gegenphasigen Druckverlauf in der Kammer erzeugt und hierdurch den in den Fahrzeugsitz eingeleiteten Schwingungen entgegenwirkt.

12. Auflage für einen Fahrzeugsitz, mit wenigstens einer flüssigkeitsgefüllten Kammer, und einer druckerzeugenden Einrichtung zur Veränderung des Drucks in der Kammer, **dadurch gekennzeichnet, daß** die druckerzeugende Einrichtung so mit einer Steuerungs- oder Regelungseinrichtung zusammenwirkt, daß bei Erkennen eines Fahrzeugcrashs der Druck in der Kammer schlagartig erhöht werden kann.

13. Auflage für einen Fahrzeugsitz, mit einer Mehrzahl flüssigkeitsgefüllter Kammern die zumindest teilweise durch Kanäle miteinander verbunden sind, **dadurch gekennzeichnet, daß** die Viskosität der Flüssigkeit und/oder die Form und die Größe der Kanäle im einzelnen so bemessen ist, daß - über der Kontaktfläche mit dem Fahrzeuginsassen betrachtet - eine konstante Flächenpressung erreicht wird.

14. Auflage nach einem der vorangegangenen Ansprüche,
**gekennzeichnet durch** eine druckerzeugende Einrichtung zur Veränderung des Drucks in der Kammer, wobei die druckerzeugende Einrichtung so mit einer Steuerungseinrichtung zusammenwirkt, daß der Druck in der Kammer gemäß einer Vorgabe **durch** den Fahrzeuginsassen einstellbar ist.

15. Auflage nach einem der vorangegangenen Ansprüche,
**gekennzeichnet durch** eine druckerzeugende Einrichtung zur Veränderung des Drucks in der Kammer, wobei die druckerzeugende Einrichtung so mit einer Steuerungs- oder Regelungseinrichtung zusammenwirkt, daß in der Kammer Druckschwankungen zur Erzielung eines Massageeffektes erzeugbar sind.

16. Auflage nach wenigstens einem der vorangegangenen Ansprüche,
**dadurch gekennzeichnet, daß** die Auflage zumindest teilweise aus einem folienartigen Material besteht, wobei in das folienartige Material wenigstens ein Sensor zur Erfassung des vom Fahrzeuginsassen ausgeübten Drucks und/oder des Drucks in der Kammer integriert ist.

17. Fahrzeugsitz (11) mit wenigstens einer Auflage (1) nach einem der vorangegangenen Ansprüche.

## Claims

1. A covering (1) for a vehicle seat (11) comprising a number of liquid-filled chambers (4), at least some of which are connected by ducts (5), **characterised in that** the viscosity of the liquid (6) and/or the shape or size of the ducts (5) is individually dimensioned so that regions having varying shock-absorption and spring characteristics are formed over the surface in contact with the vehicle occupant and are adapted to the load of the occupant at the respective place.

2. A covering according to claim 1,
**characterised in that** the chambers (4) are disposed in a defined, limited area of the surface of contact between the seat (11) and an occupant, for controlled support of the respective part of the occupant's body.

3. A covering according to claim 1 and/or 2,
**characterised in that** a number of separate coverings (1) are disposed on the vehicle seat (11).

4. A covering according to claim 1 or 2,
**characterised in that** a number of independently operating coverings (1) are combined along their edges or borders (10) to form a one-piece structure, without contact between the liquid-filled chambers (4) in the individual coverings (1).

5. A covering according to any of the preceding claims,
**characterised in that** the covering (1) on top and underneath is made of a sheet-like plastic material, the sheets (2, 7) being welded together in liquid-tight manner to form the individual chambers (4).

6. A covering according to any of the preceding claims,
**characterised in that** the weld seams (3) between the individual chambers (4) are at least partly perforated.

7. A covering according to any of the preceding claims,
**characterised in that** at least the plastics material (2) on top is transparent and/or coloured.

8. A covering according to any of the preceding claims,
**characterised in that** the chambers (4) are filled with a coloured liquid (6).

9. A covering according to any of the preceding claims,
**characterised in that** the chambers (4) contain an insert in the form of at least one solid member (9).

10. A covering according to claim 9,
**characterised in that** the insert comprises a number of members (9) of varying size and/or hardness.

11. A covering for a vehicle seat comprising at least one liquid-filled chamber and a pressure-generating means for altering the pressure in the chamber, **characterised in that** the pressure-generating means co-operates with a control means so as to produce a closed control circuit which, when vibration is introduced into the covering, generates a pressure curve in the chamber in phase opposition to the vibration and thus counteracts the vibration introduced into the vehicle seat.

12. A covering for a vehicle seat comprising at least one liquid-filled chamber and a pressure-generating means for altering the pressure in the chamber, **characterised in that** the pressure-generating means co-operates with a closed-loop or open-loop control means so that if a crash of the vehicle is detected, the pressure in the chamber can be abruptly increased.

13. A covering for a vehicle seat comprising a number of liquid-filled chambers, at least some of which are connected by ducts, **characterised in that** the viscosity of the liquid and/or the shape and size of the ducts are individually dimensioned so that a constant pressure per unit area is obtained over the area in contact with the occupants of the vehicle.

14. A covering according to any of the preceding claims,
**characterised by** a pressure-generating means for altering the pressure in the chamber, wherein the pressure-generating means co-operates with a control means such that the pressure in the chamber is adjustable as preset by the occupant.

15. A covering according to any of the preceding claims,
**characterised by** a pressure-generating means for altering the pressure in the chamber, wherein the pressure-generating co-operates with a closed-loop or open-loop control device such that pressure fluctuations can be generated in the chamber in order to obtain a massage effect.

16. A covering according to at least one of the preceding claims,
**characterised in that** the covering is made at least partly of a material in sheet form, wherein at least one sensor is incorporated in the sheet material in order to detect the pressure exerted by the occupant and/or the pressure in the chamber.

17. A vehicle seat (11) having at least one covering (1) according to any of the preceding claims.

## Revendications

1. Garniture (1) de siège de véhicule (11) ayant plusieurs chambres (4) remplies de liquide et qui sont reliées au moins en partie par des canaux (5),
**caractérisée en ce que**
la viscosité du liquide (6) et/ou la forme et la taille des canaux (5) sont dimensionnées de manière détaillée pour que si l'on considère la surface de contact avec le passager, on forme des zones ayant des caractéristiques d'amortissement et de suspension différentes et qui sont adaptées à la sollicitation respective exercée par le passager.

2. Garniture selon la revendication 1,
**caractérisée en ce que**
les chambres (4) sont prévues à des endroits et dans des zones délimités de la surface de contact du siège de véhicule (11) là où se trouvent les passagers du véhicule, pour permettre un appui précis des parties concernées du corps du passager.

3. Garniture selon la revendication 1 et/ou 2,
**caractérisée par**
plusieurs appuis (1) prévus sur le siège (11) du véhicule.

4. Garniture selon la revendication 1 et/ou 2,
**caractérisée en ce que**
plusieurs garnitures (1) à effet indépendant, sont un assemblées suivant leurs ceintures (10) pour former une structure en une seule pièce, les chambres (4) remplies de liquide des différentes garnitures (1) ne communiquant pas.

5. Garniture selon l'une quelconque des revendications précédentes,
**caractérisée en ce que**
la garniture (1) a une face supérieure et une face inférieure réalisées en une matière synthétique en forme de film, les films (2, 7) étant soudés de manière étanche au liquide pour former les différentes chambres (4).

6. Garniture selon l'une quelconque des revendications précédentes,
**caractérisée en ce que**
les cordons de soudure (3) entre les différentes chambres (4) sont au moins en partie perforés.

7. Garniture selon l'une quelconque des revendications précédentes,
**caractérisée en ce qu'**
au moins la matière plastique du côté supérieur (2) est transparente et/ou teintée.

8. Garniture selon l'une quelconque des revendications précédentes,
**caractérisée en ce que**
le chambres (4) sont remplies d'un liquide teinté (6).

9. Garniture selon l'une quelconque des revendications précédentes,
**caractérisée en ce que**
les chambres (4) contiennent un insert sous la forme d'au moins un corps solide (9).

10. Garniture selon la revendication 9,
**caractérisée en ce que**
l'insert est constitué par plusieurs corps (9) de taille et/ou de dureté différente.

11. Garniture de siège de véhicule ayant au moins une chambre remplie de liquide et une installation générant une pression pour modifier la pression dans la chambre,
**caractérisée en ce que**
l'installation générant la pression coopère avec une installation de régulation pour former un circuit de régulation, fermé, qui lorsqu'on introduit des vibrations dans la garniture crée une courbe de pression en opposition de phase avec celle des vibrations dans la chambre et s'oppose ainsi aux vibrations induites dans le siège de passager.

12. Garniture de siège de passager ayant au moins une chambre remplie de liquide et une installation créant une pression pour modifier la pression dans la chambre,
**caractérisée en ce que**
l'installation générant la pression coopère avec une installation de commande ou de régulation pour que si une collision est détectée, la pression dans la chambre puisse être augmentée brutalement.

13. Garniture de siège de véhicule ayant plusieurs chambres remplies de liquide et reliées au moins en partie par des canaux,
**caractérisée en ce que**
la viscosité du liquide et/ou la forme et la taille des canaux sont dimensionnées de matière détaillée pour que la surface de contact considérée comme les passagers du véhicule, réalise une pression de surface, constante.

14. Garniture selon l'une des revendications précédentes,
**caractérisée par**
une installation générant une pression pour modifier la pression dans la chambre, cette installation générant la pression coopérant avec l'installation de commande pour que la pression dans la chambre puisse se régler suivant une consigne donnée par les passagers.

15. Garniture selon l'une quelconque des revendications précédentes,
**caractérisée par**
une installation générant une pression pour modifier la pression dans la chambre, l'installation générant la pression coopérant avec l'installation de commande et de régulation pour que des variations de pression dans la chambre génèrent un effet de massage.

16. Garniture selon l'une quelconque des revendications précédentes,
**caractérisée en ce que**
la garniture est formée au moins en partie d'un matériau en forme de film et la matière en forme de film comporte un capteur pour la détection de la pression exercée par les occupants du véhicule et/ou la pression dans la chambre.

17. Siège de véhicule (11) ayant au moins une garniture (1) selon l'une des revendications précédentes.
